Europäisches Patentamt

European Patent Office

Office européen des brevets

(19)

(11) EP 0 728 786 B1

(12) FASCICULE DE BREVET EUROPEEN

(45) Date de publication et mention
de la délivrance du brevet:
**24.10.2001 Bulletin 2001/43**

(51) Int Cl.[7]: **C08G 18/72**, C08G 18/08,
C08G 18/80, C09D 175/04

(21) Numéro de dépôt: **96400321.4**

(22) Date de dépôt: **16.02.1996**

(54) **Composition utile pour les revêtements, à base de mélange d'émulsion(s) et de dispersion(s) de polymère polyol et revêtement(s) qui en sont issus**

Zusammensetzung für auf Mischungen von Emulsionen und Dispersionen von Polymeren basierte Lackierungen, sowie daraus hergestellte Beschichtungen

Composition useful for lacquers based on mixtures of emulsions and dispersions of polymers and coatings prepared therefrom

(84) Etats contractants désignés:
**AT BE CH DE DK ES FR GB GR IE IT LI LU MC NL PT SE**

(30) Priorité: **21.02.1995 FR 9502001**

(43) Date de publication de la demande:
**28.08.1996 Bulletin 1996/35**

(73) Titulaire: **RHODIA CHIMIE**
**92408 Courbevoie Cédex (FR)**

(72) Inventeurs:
• **Langlois, Bruno**
**F-91700 Sainte-Genevieve des Bois (FR)**
• **Reeb, Roland**
**F-77410 Gressy (FR)**
• **Guérin, Gilles**
**F-95600 Eaubonne (FR)**

(74) Mandataire: **Ricalens, François et al**
**Rhodia Services,**
**Direction de la Propriété Industrielle,**
**40, rue de la Haie-Coq**
**93306 Aubervilliers Cedex (FR)**

(56) Documents cités:
**EP-A- 0 358 979        EP-A- 0 557 844**
**WO-A-94/22935**

## Description

La présente invention concerne des mélanges d'émulsions avec des dispersions de polymère. Elle concerne plus particulièrement la stabilité d'une dispersion particulièrement fine de polyol, avantageusement un (nano)latex, conjointement avec une émulsion d'isocyanate, le plus souvent masqué.

De telles compositions sont notamment utiles pour les vernis et la peinture, mais elles peuvent être utiles pour toute application utilisant les propriétés de condensation des isocyanates. Elles peuvent également être utiles dans tout domaine dans lequel on a à faire coexister des émulsions d'isocyanates, en général bloqués, avec des dispersions d'alcools insolubles de granulométrie différente et notamment dans les formulations pour l'agriculture.

Dans la suite de la présente description, on utilisera le terme de dispersion pour les polymères à fonctions hydroxyles et notamment les polyols cependant qu'on utilisera l'expression émulsions pour les isocyanates, bloqués ou non.

L'utilisation de solvants organiques est de plus en plus souvent critiquée par les autorités en charge de la sécurité du travail, car ces solvants, ou du moins certains d'entre eux, sont réputés toxiques ou chronotoxiques. C'est la raison pour laquelle on essaye de développer de plus en plus des techniques qui se substituent aux techniques en milieu solvant pour pallier les inconvénients afférents aux solvants.

Une des solutions les plus souvent utilisées réside dans l'utilisation d'émulsions ou de dispersions dans l'eau.

Pour réaliser des films de peintures ou de vernis, on mélange deux dispersions, une émulsion contenant l'isocyanate qui peut être bloqué et une dispersion de polyol.

Le mélange des dispersions pouvant également contenir des pigments et des charges est alors déposé sur un support sous forme d'un film à l'aide des techniques classiques de mise en oeuvre des peintures industrielles. Lorsque la préparation contient des isocyanates bloqués, l'ensemble film plus support est cuit à une température suffisante pour assurer le déblocage des fonctions isocyanate et la condensation de celles-ci avec des groupements hydroxyles des particules de polyol.

Dans la présente description, les caractéristiques de granulométrie font souvent référence à des notations du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme suit

$$I = (d_{90}-d_{10})/d_{50}$$

Typiquement, les rapports des tailles moyennes ($d_{50}$) entre l'émulsion d'isocyanate et la dispersion de polyol sont compris entre 2 et 200. Ainsi les tailles moyennes des émulsions d'isocyanates fabriquées selon la technique décrite dans la demande de brevet français déposée le 31.03.1993 sous le n° 93 03795 et publiée sous le n° 2703358 le 07.10.94, ont des tailles moyennes comprises entre 0,1 et 10 micromètres et plus généralement entre 0,3 et 2 micromètres. Les dispersions de polyols utilisées en association avec ces émulsions ont des tailles moyennes mesurées par diffusion quasi élastique de la lumière comprises entre 20 et 200 nanomètres et plus généralement comprises entre 50 et 150 nanomètres.

Lorsque l'on mélange des dispersions de tailles différentes, ce qui est généralement le cas, de manière à obtenir des rapports molaires entre les groupements NCO et OH compris entre 0,3 à 10 et plus préférentiellement entre 0,8 et 1,5, on observe une instabilité des mélanges des deux dispersions.

A titre d'exemple, cette instabilité se traduit par une séparation macroscopique rapide, en quelques minutes généralement, pour donner d'une part une phase fluide et d'autre part une phase très visqueuse.

Il s'ensuit non seulement une impossibilité à conserver (stocker) ces mélanges, mais aussi une difficulté extrême à appliquer ce mélange sur la surface que l'on désire recouvrir selon les techniques usuelles d'application des peintures et des vernis. Si on fait en sorte d'appliquer ces mélanges instables sur un support, tel que sur une plaque de verre ou métallique, le film résultant n'est pas transparent mais apparaît opaque et hétérogène et donc ne convient pas.

Ces problèmes sont particulièrement aigus dans le cas d'isocyanates, masqués ou non, lorsqu'ils sont mélangés à des polyols non solubles, dispersés dans l'eau et lorsque la dispersion est très fine, c'est-à-dire que lorsque le rapport R est supérieur ou égal 30 (un chiffre significatif).

Ainsi un des buts de la présente invention est de fournir une technique qui permette de fournir des mélanges fluides et stables d'une émulsion isocyanate avec des dispersions très fines de polyols qui soient stables "per se", notamment sans qu'il y ait lieu d'ajouter d'additif supplémentaire ou de neutralisant par exemple pour ajuster un pH.

Un autre but de la présente invention est de fournir des compositions comportant une émulsion d'isocyanates masqués et une dispersion de polyols qui soient physiquement stables pendant un mois au moins.

L'autre but de l'invention est d'obtenir, à partir de ces mélanges stables et fluides de cette émulsion avec une dispersion de polyol, des films présentant de bonnes propriétés de brillance, transparence et résistance aux solvants.

Ces buts sont atteints au moyen d'une composition comportant

- - au moins un polyisocyanate masqué ou non sous la forme d'un émulsion aqueuse dont la taille moyenne est comprise entre 0,1 et 10 micromètres et de préférence inférieure à 2 et supérieure à 0,2 micromètre.
- - au moins un polymère polyhydroxylé, avantageusement un polyol, sous forme d'une dispersion aqueuse dont la taille moyenne est comprise entre 10 et 200 nanomètres.

Le rapport (R) entre les tailles moyennes des particules élémentaires ($d_{50}$) de l'émulsion et celle de la dispersion de polyol est au moins égal à 30 (un chiffre significatif) et de préférence au plus égal à 200.

Il est très souhaitable que l'émulsion et/ou la dispersion soit aussi peu disperse que possible.

Ainsi pour les polymères polyhydroxylés, l'indice de polydispersité (défini comme $I = (d_{90}-d_{10})/d_{50}$) soit au plus égal à 2 avantageusement égal à 1. Ces valeurs sont particulièrement satisfaisantes pour pour les latex. Pour les autres types de polymères, les meilleurs résultats sont obtenus pour des valeurs de 0,2 à 0,1 voire moins.

Ainsi pour les polyisocyanates masqués ou non l'indice de polydispersité défini comme $(d_{90}-d_{10})/d_{50}$ est au plus égal à 2 avantageusement égal à 1. Les meilleurs résultats étant obtenus pour des valeurs de 0,9 à 0,8 voire moins.

Les zones de formulation dépendent du rapport R des tailles moyennes ($d_{50}$) entre l'émulsion d'isocyanate et celles de la dispersion de polymère(s) polyhydroxylé(s), avantageusement de polyols.

R est égal à la taille moyenne de l'émulsion sur la taille moyenne de la dispersion de polymère polyhydroxylé, avantageusement de polyol.

Selon l'invention, la quantité en polymère polyhydroxylé, avantageusement en polyol, du mélange est choisie de manière à répondre à la contrainte suivante :

- la teneur en polymère polyhydroxylé, avantageusement en polyol, exprimée en pourcent massique est au moins égale à 5/6R - 20 avantageusement au moins égal à 5/6R -18 , de préférence à 5/6R -16 ;

avec R égal au rapport entre la taille moyenne ($d_{50}$) de l'émulsion et celle de la dispersion de polymère polyhydroxylé, avantageusement de polyol.

En d'autre terme R = ($d_{50}$ de l'émulsion)/($d_{50}$ de la dispersion)

Le rapport entre le nombre de fonctions hydroxyles et le nombre de fonctions isocyanates, masquées ou non, peut varier très largement comme cela a été indiqué ci-dessus.

Les rapports inférieurs à la stoechiométrie sont favorables à la plasticité, cependant que des rapports supérieurs à la stoechiométrie conduisent à des revêtements de forte dureté. Il est rare que l'on ait des rapports s'écartant du domaine allant de 0,5 à 2 .

Toutefois, dans la plupart des cas et pour les utilisations les plus courantes, pour obtenir des films de vernis ou de peinture qui soient satisfaisants, il est préférable que la quantité, exprimée en équivalent, d'isocyanates bloqués réactifs soit sensiblement égale à celle des fonctions alcool libres et réactives, exprimée en équivalent, c'est-à-dire répondent à la stoechiométrie. A titre indicatif, on peut indiquer qu'il existe une tolérance de plus ou moins 20% par rapport à la stoechiométrie, mais il est préférable de n'utiliser qu'une tolérance de plus ou moins 10 %.

Les émulsions de isocyanates sont avantageusement faites selon la technique décrite dans la demande de brevet français publiée sous le n°2703358 le 07.10.94, déposée le 31.03.1993 sous le n° 93 03795 et intitulée : "Procédé de préparation d'émulsions aqueuses d'huiles et/ou de gommes et/ou de résines (poly)isocyanates avantageusement masqués et émulsions obtenues".

En ce qui concerne les éléments additionnels d'une composition selon la présente invention, II est possible qu'elle comporte en outre au moins un catalyseur de libération des isocyanates masqués, et notamment des catalyseurs, latents ou non, à base d'étain. On peut signaler que ces catalyseurs peuvent se trouver, soit au sein de la phase polyols, soit au sein de la phase isocyanate masqué, soit sous forme dispersée au sein de la phase aqueuse continue. Il peuvent enfin être dissous dans la phase aqueuse .

Les dispersions de polyols utilisables pour l'invention sont, sauf en ce qui concerne leur finesse, des produits classiques utilisés dans l'industrie des peintures et vernis. Ce sont le plus souvent des (co)polymères fabriqués en émulsion selon les procédés classiques de la polymérisation radicalaire ou en masse.

Les nanolatex sont avantageusement ceux qui peuvent être obtenus par les procédés décrits ou cités dans la demande européenne déposée sous le numéro le n° 94/401795.3 ou ceux qui sont décrits dans leur usage de liant dans la demande européenne n° 94/402370.4. Il sont plus particulièrement faits à partir d'acrylate d'alcoylène diol, et notamment de méthacrylate d'éthylène glycol qui présente une des fonctions "ol" libre.

On peut rappeler ci-après la technique décrite dans la demande européenne déposée sous le numéro le n° 94/401795.3.

Ce procédé permet de préparer des latex en émulsion de taille ultrafine qui ne se décolorent pas, ont une granulométrie reserrée, sont aisément reproductibles, utilisant une quantité minimale de tensioactif. Ce procédé est en particulier caractérisé par l'introduction incrémentielle de monomères et d'initiateurs dans un milieu réactionnel aqueux de sorte que l'ionicité du milieu réactionnel reste constante.

Un mode de réalisation du procédé pour produire une dispersion à base d'eau contenant entre environ 15 et environ 50% en poids de produits solides, comporte les étapes suivantes :

(a) addition incrémentielle d'un ou plusieurs monomères éthyléniquement insaturés, capables de se polymériser dans un environnement aqueux, à un réacteur contenant de l'eau et jusqu'à 6,3 parties, pour 100 parties desdits monomères, d'un ou plusieurs tensioactifs ;

(b) addition incrémentielle d'un ou plusieurs initiateurs de polymérisation audit réacteur ; et

(c) polymérisation dudit ou desdits monomères éthyléniquement insaturés de sorte que la taille moyenne des particules desdits monomères polymérisés soit inférieure à 100 nm.

Dans les modes de réalisation préférés, le procédé utilise des monomères dérivés d'acides et d'esters acryliques, et donne des latex de taille ultrafine ayant une taille moyenne des particules inférieure à 50 nm.

Le latex polymère de taille ultrafine obtenu par ce procédé est stable à la coagulation et peut donc être dilué avec de l'eau. Les particules de polymère ont plusieurs attributs physiques tels qu'une bonne formation de pellicule, une bonne pénétration dans les substrats poreux, un rapport surface spécifique à volume très élevé, une monomodalité et similaires.

Si l'on revient à des polyols non nanolatex, à titre d'exemple ou plutôt de paradigme, on peut citer le produit vendu sous la marque :RHOPLEX® AC-1024 (confère la notice technique éditée en 1984).

Dans le cas des peintures, il peut être ajouté tout pigment connu en lui-même, à condition qu'il soit inerte vis à vis des constituants de la composition.

Quoiqu'il soit possible selon la présente invention d'utiliser les isocyanates non masqués, et comme ces derniers sont peu stables dans l'eau, les isocyanates préférés sont ceux qui sont masqués notamment par les agents de masquage en eux-mêmes connus tels que les phénols, les oximes de cétones et notamment celui de la méthyléthylcétone, les divers pyrazoles.

Les isocyanates préférés sont ceux dont l'azote d'au moins une des fonctions isocyanates est rattachée à un carbone d'hybridation $sp^3$ portant avantageusement un, et de préférence deux, atome(s) d'hydrogène. les isocyanates dont toutes les fonctions présentent cette caractéristique (avec eventuellement ses options préférées) sont très appréciées.

On peut en particulier citer les isocyanates, masqués ou non, qui présentent un ou plusieurs cycles isocyanuriques et/ou au moins une des fonctionnalités de type biuret ou dimère.

Il est préférable que les isocyanates présentent les deux caractéristiques spécifiées ci-dessus, à savoir oligomérie et caractère aliphatique sur au moins une des fonctions isocyanates.

Avantageusement la teneur en eau desdites compositions est au moins égale à un tiers de la masse de la composition avantageusement au moins 2/5.

Les polyols préférés se présentent sous forme de dispersion aqueuse de nanolatex, ils ont une taille moyenne inférieure à 50 nanomètres. On préfère des dispersions aqueuses à faible teneur en composés solubles dans l'eau tels que les alcools et les amines qui peuvent conduire à la coalescence de l'émulsion d'isocyanates. Il est donc très souhaitable que la teneur cumulée en divers alcools et amines soient inférieure à celle qui induirait une coalescence de l'émulsion d'isocyanates.

La présente invention vise également les revêtements obtenus à partir des compositions suivant la présente invention. Ces revêtements peuvent être obtenus par réticulation, en particulier par cuisson à une température voisine de celle correspondant à la libération des isocyanates masqués éventuellement en présence d'un, ou plusieurs, catalyseurs.

Les exemples non limitatifs suivants illustrent l'invention.

## Exemple 1

le TOLONATE D2® est un mélange d'oligomères à cycle isocyanurique essentiellement du trimère masqué par l'oxime de la méthyléthylcétone.

le TOLONATE D2®a est un mélange d'oligomères à cycle isocyanurique essentiellement du trimère masqué par le diméthylpyrazole.

Le Nanolatex 42 est une dispersion de nanolatex préparé selon la technique décrite ci-après. Il présente un diamètre moyen 32,5 nm (diamètre hydrodynamique compris entre 30 et 35 nm) mesuré par diffusion quasi élastique de la lumière. Il est constitué de 30 % de motif méthacrylate de méthyle ; de 50 % de motif d'acrylate de butyle et de 20 % de motif méthacrylate d'éthylène glycol (méthacrylate d'hydroxy-2éthyle). Son extrait sec est de 29 %, son pH est de 2,5 et sa Tg (température de transition vitreuse) est égale à 15°C.

L'isocyanate est émulsionné sous la forme d'une émulsion dont le $d_{50}$ est de 1,1 micromètre. Le rapport des tailles (R) est égal à 35.

Le mélange contenant 20% en poids de Nanolatex42 et 10% en poids de TOLONATE® est fluide et stable.

Le mélange Nanolatex 42/ TOLONATE® de 9% /9% qui correspond donne lieu à une séparation de phase macroscopique entre une phase fluide et un mélange floculé.

## Exemple 2

Le Nanolatex R27 est une dispersion de nanolatex préparé selon la technique décrite ci-après. Il est de diamètre moyen 27,5 nm (diamètre hydrodynamique compris entre 20 et 35 nm) mesuré par diffusion quasi élastique de la lumière. Il est constitué de 40 % de motif méthacrylate de méthyle ; de 50 % de motif d'acrylate de butyle et de 10% de motif méthacrylate d'éthylène glycol (méthacrylate d'hydroxy-2éthyle). Son extrait sec est de 30 %, son pH est de 2,5 et sa Tg (température de transition vitreuse) est égale à 20°C.

L'isocyanate est émulsionné sous la forme d'une émulsion dont le $d_{50}$ est de 1,1 micromètre. Le rapport des tailles (R) est égal à 42. Le mélange contenant 20% en poids de Nanolatex R27 et 10% en poids de TOLONATE®, est fluide et stable.

Le mélange Nanolatex 42/ TOLONATE® de 12%/12% qui correspond donne lieu à une séparation de phase macroscopique entre une phase fluide et un mélange floculé.

## Exemple 3 synthèse des nanolatex des exemples 1 et 2

Une solution de charge est préparée par mélange des monomères acryliques dans les proportions indiquées dans chacun des exemples.

Dans un récipient d'alimentation séparé, on ajoute 0,25 ppc de peroxydisulfate d'ammonium à 65 ppc d'eau. Dans un réacteur séparé, on ajoute 3ppc de dodécylsulfate de sodium à 195 ppc d'eau et on chauffe à 85 °C sous agitation continue. La raison de la préparation de la solution d'initiateur aqueuse séparée est de permettre une ionicité constante dans le réacteur tout au long du mode opératoire de synthèse. Dix pour cent du volume total de la solution de peroxydisulfate d'ammonium sont ajoutés au mélange chauffé, et les solutions d'initiateur et de monomère commencent à être introduites à un débit qui permette une introduction régulière des solutions de charge sur un intervalle de trois heures. Le mélange réactionnel est agité pendant 30 minutes de plus et ensuite refroidi à 62 °C. 0,10 ppc de métabisulfite de sodium est dissous dans 24ppc d'eau et introduit dans le mélange réactionnel sur un intervalle de 1 heure. La température de réaction est ensuite portée à 85 °C pendant 1 heure. Le mélange est ensuite refroidi à la température ambiante et filtré. Cette charge aboutit à un latex polymère aqueux.

## Revendications

1. Composition comportant :

   - au moins un polyisocyanate masqué ou non sous la forme d'une émulsion aqueuse dont la taille moyenne est comprise entre 0,1 et 10 micromètres et, de préférence inférieure à 2 et supérieure à 0,2 micromètre.
   - au moins un polymère polyhydroxylé, avantageusement un polyol, sous forme d'une dispersion aqueuse dont la taille moyenne est comprise entre 10 et 200 nanomètres, **caractérisée par le fait que** la quantité en polymère polyhydroxylé, avantageusement en polyol, du mélange est choisie de manière à répondre à la contrainte suivante :

   la teneur en polymère polyhydroxylé, avantageusement en polyol, exprimée en pourcent massique est au moins égale à 5/6R - 20, avantageusement au moins égale à 5/6R - 18 , de préférence à 5/6R - 16 ;

   avec R égal au rapport entre la taille moyenne ($d_{50}$) de l'émulsion et celle de la dispersion de polymère polyhydroxylé, avantageusement de polyol.

2. Composition selon la revendication 1, **caractérisée par le fait que** ledit rapport R est au moins égal à 30.

3. Composition selon les revendications 1 et 2, **caractérisée par le fait que** le(s) polyisocyanate(s), masqué(s) ou non, présente(nt) un indice de polydispersité, défini comme $(d_{90}-d_{10})/d_{50}$, au plus égal à 2, avantageusement égal à 1.

4. Composition selon les revendications 1 à 3, **caractérisée par le fait que** le(s)dit(s) polymère(s) polyhydroxylé(s), présente un indice de polydispersité (défini comme $I = (d_{90}-d_{10})/d_{50}$), au plus égal à 2, avantageusement égal à 1.

5. Composition selon les revendication 1 à 4, **caractérisée par le fait que** la dispersion de polyols initiale présente un taux de solide compris entre 15% et 50%.

6. Composition selon les revendications 1 à 5, **caractérisée par le fait qu'**elle comporte, en outre, au moins un catalyseur de libération des isocyanates masqués et notamment des catalyseurs, latents ou non, à base d'étain.

7. Composition selon les revendications 1 à 6, **caractérisée par le fait que** la teneur en eau desdites compositions est au moins égale à 1/3 de la masse de la composition avantageusement au moins 2/5.

8. Composition selon les revendications 1 à 7, **caractérisée par le fait que** ledit polyisocyanate présente un ou plusieurs cycles isocyanuriques et/ou au moins une des fonctionnalités de type biuret ou dimère.

9. Composition selon les revendications 1 à 8, **caractérisée par le fait que** ledit polyisocyanate est choisi parmi ceux dont l'azote d'au moins une des fonctions isocyanates est rattaché à un carbone d'hybri-

dation sp$^3$ portant avantageusement un et, de préférence, deux atome(s) d'hydrogène.

10. Composition selon les revendications 1 à 9, **caractérisée par le fait que** ledit polyisocyanate est choisi parmi ceux qui sont masqués, notamment par les agents de masquage en eux-mêmes connus, tels que les phénols, les oximes de cétones et notamment celui de la méthyléthylcétone, les divers pyrazoles.

11. Composition selon les revendications 1 à 10, **caractérisée par le fait que** ledit polyol est un nanolatex.

12. Composition selon la revendication 11, **caractérisée par le fait que** le $d_{50}$ dudit nanolatex est inférieur à 50 nanomètres.

13. Composition selon les revendications 1 à 10, **caractérisé par le fait que** la taille moyenne ($d_{50}$) des particules de la dispersion de polyols est comprise entre 50 et 150 nanomètres.

14. Composition selon les revendications 1 à 13, **caractérisée par le fait que** ladite composition est obtenue par mélange d'une dispersion et d'une émulsion.

15. Revêtement **caractérisé par le fait qu'**il peut être obtenu par réticulation à partir des compositions selon les revendications 1 à 14.

**Patentansprüche**

1. Zusammensetzung, die umfasst:

   - wenigstens ein maskiertes oder nicht maskiertes Polyisocyanat in Form einer wässrigen Emulsion, deren mittlere Größe zwischen 0,1 und 10 Mikrometer liegt und vorzugsweise kleiner als 2 und größer als 0,2 Mikrometer ist,
   - wenigstens ein Polyhydroxypolymer, vorteilhafterweise ein Polyol, in Form einer wässrigen Dispersion, deren mittlere Größe zwischen 10 und 200 Nanometer liegt,

   **dadurch gekennzeichnet, dass** die Menge an Polyhydroxypolymer, vorteilhafterweise an Polyol, des Gemischs so gewählt ist, dass sie der folgenden Einschränkung entspricht:

   - der Gehalt an Polyhydroxypolymer, vorteilhafterweise an Polyol, ausgedrückt in Masseprozent, beträgt wenigstens gleich 5/6R-20, vorteilhafterweise wenigstens gleich 5/6R-18, vorzugsweise 5/6R-16,

   wobei R gleich dem Verhältnis zwischen der mittleren Größe ($d_{50}$) der Emulsion und derjenigen der Dispersion aus Polyhydroxypolymer, vorteilhafterweise aus Polyol, ist.

2. Zusammensetzung gemäß Anspruch 1, **dadurch gekennzeichnet, dass** besagte(s) maskierte(s) oder nicht maskierte(s) Polyisocyanate(Polyisocyanat) einen Polydispersitätsindex, der definiert ist als $(d_{90}-d_{10})/d_{50}$, von höchstens gleich 2, vorteilhafterweise gleich 1, aufweisen(aufweist).

3. Zusammensetzung gemäß den Ansprüchen 1 und 2, **dadurch gekennzeichnet, dass** besagte(s) Polyhydroxypolymere(-polymer) einen Polydispersitätsindex (definiert als $I = (d_{90}-d_{10})/d_{50}$) von höchstens gleich 2, vorteilhafterweise gleich 1, aufweisen(aufweist).

4. Zusammensetzung gemäß den Ansprüchen 1 bis 3, **dadurch gekennzeichnet, dass** sie außerdem wenigstens einen Katalysator zur Freisetzung der maskierten Isocyanate und insbesondere latente oder nicht latente Katalysatoren auf der Basis von Zinn umfasst.

5. Zusammensetzung gemäß den Ansprüchen 1 bis 4, **dadurch gekennzeichnet, dass** der Wassergehalt besagter Zusammensetzungen wenigstens gleich einem Drittel der Masse der Zusammensetzung, vorteilhafterweise wenigstens 2/5, ist.

6. Zusammensetzung gemäß den Ansprüchen 1 bis 5, **dadurch gekennzeichnet, dass** besagtes Polyisocyanat einen oder mehrere Isocyanurringe und/oder wenigstens eine der funktionellen Gruppen vom Biurettyp oder dimeren Typ aufweist.

7. Zusammensetzung gemäß den Ansprüchen 1 bis 6, **dadurch gekennzeichnet, dass** besagtes Polyisocyanat unter denjenigen ausgewählt ist, bei denen der Stickstoff von wenigstens einer der Isocyanatfunktionen an ein sp$^3$-hybridisiertes Kohlenstoffatom gebunden ist, das vorteilhafterweise ein, vorzugsweise zwei Wasserstoffatom(e) trägt.

8. Zusammensetzung gemäß den Ansprüchen 1 bis 7, **dadurch gekennzeichnet, dass** besagtes Polyisocyanat unter denjenigen ausgewählt ist, die insbesondere durch die an sich bekannten Maskierungsmittel, wie die Phenole, die Oxime von Ketonen und insbesondere dasjenige von Methylethylketon, die verschiedenen Pyrazole, maskiert sind.

9. Zusammensetzung gemäß den Ansprüchen 1 bis 8, **dadurch gekennzeichnet, dass** besagtes Polyol ein Nanolatex ist.

10. Beschichtung, **dadurch gekennzeichnet, dass** sie aus den Zusammensetzungen gemäß den Ansprüchen 1 bis 9 durch Vernetzung erhalten werden kann.

## Claims

1. Composition comprising:

   - at least one masked or unmasked polyisocyanate in the form of an aqueous emulsion whose mean size is between 0.1 and 10 micrometres and preferably smaller than 2 and larger than 0.2 micrometres;
   - at least one polyhydroxylated polymer, advantageously a polyol, in the form of an aqueous dispersion whose mean size is between 10 and 200 nanometres; **characterized in that** the quantity of polyhydroxylated polymer, advantageously of polyol, in the mixture is chosen so as to meet the following constraint:

      - the content of polyhydroxylated polymer, advantageously of polyol, expressed in mass per cent, is at least equal to 5/6R - 20, advantageously at least equal to 5/6R - 18, preferably to 5/6R - 16;

   with R equal to the ratio of the mean size ($d_{50}$) of the emulsion to that of the dispersion of polyhydroxylated polymer, advantageously of polyol.

2. Composition according to claim 1, **characterized in that** the said polyisocyanate(s), masked or otherwise, has(have) a polydispersity index defined as $(d_{90}-d_{10})/d_{50}$ that is at most equal to 2 advantageously equal to 1.

3. Composition according to claims 1 and 2, **characterized in that** the said polyhydroxylated polymer (s) has(have) a polydispersity index (defined as $I = (d_{90}-d_{10})/d_{50}$) that is at most equal to 2 advantageously equal to 1.

4. Composition according to claims 1 to 3, **characterized in that** it additionally comprises at least one catalyst of release of the masked isocyanates, and especially tin-based catalysts, latent or otherwise.

5. Composition according to claims 1 to 4, **characterized in that** the water content of the said compositions is at least equal to one third of the mass of the composition advantageously at least 2/5.

6. Composition according to claims 1 to 5, **characterized in that** the said polyisocyanate has one or more isocyanuric rings and/or at least one of the functionalities is biuret or dimer type.

7. Composition according to claims 1 to 6, **characterized in that** the said polyisocyanate is chosen from those in which the nitrogen of at least one of the isocyanate functional groups is attached to a carbon with sp$^3$ hybridization advantageously carrying one, and preferably two hydrogen atom(s).

8. Composition according to claims 1 to 7, **characterized in that** the said polyisocyanate is chosen from those which are masked especially by masking agents which are themselves known, such as phenols, ketone oximes and especially methyl ethyl ketone oxime, and the various pyrazoles.

9. Composition according to claims 1 to 8, **characterized in that** the said polyol is a nanolatex.

10. Coating **characterized in that** it can be obtained by crosslinking from the compositions according to claims 1 to 9.